# EUROPÄISCHE PATENTSCHRIFT

(11) **EP 0 951 191 B1**
(45) Veröffentlichungstag und Bekanntmachung des Hinweises auf die Patenterteilung: **07.07.2004**
(21) Anmeldenummer: 99810301.4
(22) Anmeldetag: 12.04.1999
(51) Int. Cl.: H04Q 7/32

(54) **Verfahren, um Auftragscodes in einem Terminal einzugeben**
Method for inputting codes of orders in a terminal
Procédé pour l'entrée de codes de commandes dans un terminal

(30) Priorität: 16.04.1998 CH 87398
(43) Veröffentlichungstag der Anmeldung: 20.10.1999
(73) Patentinhaber: Swisscom Mobile AG, 3050 Bern (CH)
(72) Erfinder: Ritter, Rudolf, 3052 Zollikofen (CH)
(74) Vertreter: BOVARD AG - Patentanwälte

(56) Entgegenhaltungen:
- WO-A-96/04618
- WO-A-97/28510
- WO-A-97/45814

## Beschreibung

Die vorliegende Erfindung betrifft ein Verfahren, um Auftragscodes, zum Beispiel Auftragscodes zur Bestellung von Produkten oder Dienstleistungen, in einem Terminal einzugeben, wobei eine Eingabemaske für die Eingabe der Auftragscodes auf dem Bildschirm des Terminals angezeigt wird. Die vorliegende Erfindung betrifft insbesondere ein Verfahren, um Auftragscodes mit einem Mobilgerät, das mit einem Identifizierungsmodul ausgerüstet ist, einzugeben. Die vorliegende Erfindung betrifft aber auch ein Identifizierungsmodul, das in einem Mobilgerät eingesteckt werden kann, um dieses Verfahren durchzuführen.

Mobilgeräte, zum Beispiel digitale Mobilfunktelefone, werden vorwiegend dazu benutzt, um Gespräche durch einen Nutzkanal zu führen. Moderne Mobilgeräte verfügen aber ferner über zusätzliche Kanäle, um digitale Daten, insbesondere Kurzmeldungen, mit anderen Mobilgeräten oder mit Dienstservern in einem Mobilfunknetz auszutauschen. GSM-Mobilgeräte zum Beispiel können insbesondere SMS-Meldungen (Short Message Service) und USSD-Daten (Unstructured Supplementary Service Data) senden und empfangen.

Das Patent EP689368 beschreibt ein Verfahren, um Daten in SMS-Meldungen zu verpacken und durch ein Mobilfunknetz zu übertragen. Mit diesem Verfahren können zum Beispiel nicht nur kurze Textmeldungen, wie zum Beispiel «Ruf doch bitte zu Hause an», zwischen verschiedenen Terminals im Netz übermittelt werden, sondern auch komplexere Meldungen und Programme, die automatisch vom Empfängerterminal erkannt werden und eine bestimmte Aktion auslösen können. Andere Typen von Meldungen oder Trägern (Bearers) können auch im GSM-Umfeld oder in Mobilfunknetzen eines anderen Typs angewendet werden.

Verschiedene Varianten von Kommunikationsprotokollschichten wurden ausserdem über diese Transportprotokollschicht entwickelt, um eine gesicherte Übertragung von Daten zwischen Terminals in einem Telekommunikationsnetz zu erlauben. Das von der Anmelderin angebotene SICAP-Verfahren eriaubt es zum Beispiel auf einfache Weise, Daten in beiden Richtungen zwischen einem Mobilgerät und einer Betriebszentrale (Short Message Service Center oder SMS-C) durch einen gesicherten Kanal auszutauschen. Die WAP-Architektur (Wireless Application Protocol), die sich zur Zeit noch im Entwicklungsstadium befindet, von der aber eine provisorische Spezifikation (Version 0.9) schon auf dem Internet (www.xwap.com) verfügbar ist, beschreibt ein anderes Protokoll, mit dem die Benutzer von WAP-tauglichen Mobilgeräten auf Internet-, Intranet- und Internet-ähnliche Dienste über solche Bearers zugreifen können.

Damit eröffnet sich die Möglichkeit, Mobilgeräte und Mobiltelefone auch als Client in einer Client-Server-Architektur in einem Mobilfunknetz zu benutzen. Vorteilhaft in solchen Systemen ist die Möglichkeit, Kunden mit einer grossen Sicherheit mittels einem Identifizierungsmodul, zum Beispiel mittels einer SIM-Karte (Subscriber Identification Module), zu identifizieren. Es wurde zum Beispiel in der nicht vor veröffentlichten Patentanmeldung WO 98/28900 vorgeschlagen, Auftragscodes in einem Mobilgerät einzugeben, um zum Beispiel Produkte oder Dienstleistungen bei einem Lieferanten zu bestellen. Diese Auftragscodes sind standardisiert und enthalten mindestens ein erstes Feld, mit welchem ein Lieferant eindeutig identifiziert wird, sowie ein zweites Feld, mit welchem ein bestimmtes Produkt von diesem Lieferanten angegeben wird. Zusätzliche Felder können ausserdem definiert werden, um beispielsweise die Transaktionsart und die Zahlungsart anzugeben. Der Kunde wird zuverlässig von der Infrastruktur im Netz identifiziert. Die von den Teilnehmern erfassten Auftragscodes werden an eine Clearingstelle im Mobilfunknetz übermittelt und von dieser automatisch dem angegebenen Lieferanten zugeteilt. Der ausgewählte Lieferant bekommt einen Auftrag vom Kunden mit einer eindeutigen Identifizierung dieses Kunden und des bestellten Produkts oder Dienstleistung.

Mobilgeräte werden zunehmend miniaturisiert, so dass sie oft nur über sehr eingeschränkte Eingabemittel verfügen, zum Beispiel nur über eine kleine, oft unvollständige, numerische Tastatur und über einige zusätzliche Tasten. Längere Meldungen können mit diesen Eingabemitteln nur mit relativ viel Aufwand erfasst werden Es ist daher vorteilhaft, nur sehr kurze Auftragscodes zu definieren. Sind viele Lieferanten an diesem Verfahren beteiligt, müssen jedoch zwingend längere Lieferantenidentifizierungen definiert werden.

Eine Aufgabe der vorliegenden Erfindung ist es, ein Verfahren vorzuschlagen, das erlaubt, diese Probleme zu lösen und das Erfassen von längeren Auftragscodes mit Mobilgeräten zu vereinfachen.

Eine weitere Aufgabe der vorliegenden Erfindung ist es, ein Verfahren zur Eingabe und zur Übermittlung von Aufträgen in einem Telekommunikationsnetz zu schaffen, das einfacher und zuverlässiger als die üblichen Verfahren ist.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Die vorliegende Erfindung wird mit Hilfe der als Beispiel gegebenen Beschreibung besser verständlich und durch die beiliegenden Figuren veranschaulicht :

Die Figur 1 zeigt ein Blockschema des Systems zur Ausführung des erfindungsgemässen Verfahrens.

Die Figur 2 zeigt eine Eingabemaske, die für die Eingabe von Auftragscodes gemäss der Erfindung angewendet werden kann.

Die nachfolgende Beschreibung bezieht sich insbesondere auf den speziellen Fall der Übermittlung von Auftragscodes durch ein vorzugsweise digital arbeitendes, zellular aufgebautes Mobilfunknetz, zum Beispiel durch ein GSM-Netz. Der Fachmann wird jedoch verstehen, dass die Erfindung auch in Zusammenhang mit anderen Telekommunikationsnetzen angewendet werden kann, im Speziellen mit Telekommunikationsnetzen, in welchen die Teilnehmer in einer Betriebszentrale, zum Beispiel in einem Zugangspunkt an diesem Netz, identifiziert werden. Die vorliegende Erfindung kann beispielsweise auch für das Bestellen von Produkten oder Dienstleistungen mit Internet angewendet werden.

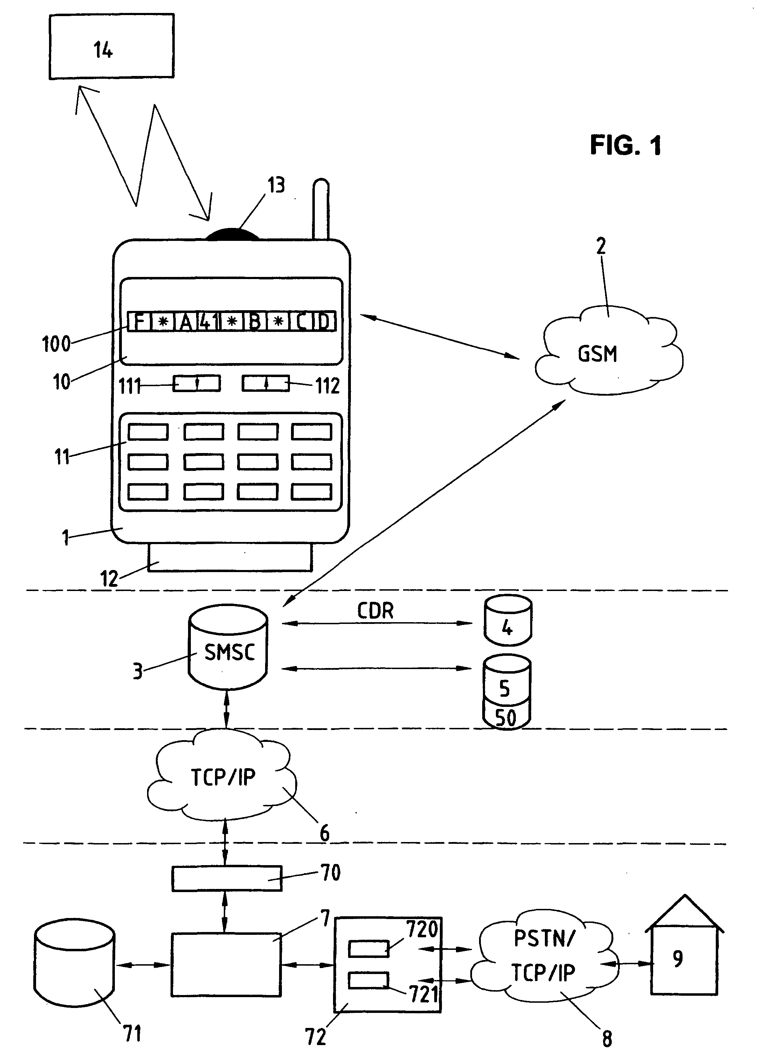

Nur die Elemente, die für das Verständnis der Erfindung benötigt werden, sind auf der Figur 1 schematisch und als Beispiel dargestellt. Für bekannte Merkmale und Komponenten des Telekommunikationsnetzes wird der Leser dagegen auf die technischen Spezifikationen des betreffenden Netzes hingewiesen. Falls die Erfindung beispielsweise für das Bestellen von Produkten und Dienstleistungen mit Mobilgeräten in einem GSM Netz angewendet werden sollte, sind die relevanten GSM Spezifikationen seit 1996 beim Sekretariat des European Telecommunications Standards Institute, F-06921 Sophia Antipolis, erhältlich.

Die vorliegende Erfindung erlaubt die Übermittlung von Auftragscodes 100 zwischen einem Kunden, der mit einem Terminal, hier ein Mobilgerät 1, ausgerüstet ist, und einem Lieferanten 9, zum Beispiel einem Produktverkäufer oder einem Dienstleistungsanbieter, zum Beispiel einem Finanzserver. Das Mobilgerät 1 umfasst in diesem Beispiel ein Identifizierungsmodul, beispielsweise eine SIM-Karte 12 (Subscriber Identity Module), zur eindeutigen Identifizierung des Teilnehmers im Telekommunikationsnetz, hier im Mobilfunknetz 2. In anderen Telekommunikationssystemen könnte der Teilnehmer auch mittels einer anderen Chipkarte, zum Beispiel mittels einer Karte gemäss der Open-Card-Spezifikation, identifiziert werden, oder mit einem geeigneten Identifizierungsprotokoll beim Einloggen, bei welchem beispielsweise ein Passwort vom ihm verlangt wird. Andere Identifizierungs- und Authentifizierungsverfahren können auch je nach Sicherheitsbedarf im Rahmen dieser Erfindung angewendet werden.

Das Format der Auftragscodes 100 ist standardisiert, wie in der oben genannten Patentanmeldung WO 98/28900 beschrieben. Wie später ausführlicher beschrieben, enthält der Auftragscode mindestens eine eindeutige Lieferantenidentifizierung 103, 104 sowie mindestens eine Produktidentifizierung 106. Damit können Produkte oder Dienstleistungen bei einem angegebenen Lieferanten eindeutig identifiziert werden. Auftragscodes 100 für bestimmte Produkte können zum Beispiel in Werbungen oder Prospekten angegeben werden, so dass der interessierte Kunde sie mit seinem Mobilgerät erfassen kann, um das angepriesene Produkt zu bestellen, oder um mehr Informationen darüber anzufordern.

Die Auftragscodes 100 können mit den Eingabemitteln 11 und mit Hilfe der Anzeige 10 eingegeben werden, wie weiter unten beschrieben. In einer Variante werden sie direkt von einem externen Gerät 14, zum Beispiel von einem Point of Sale oder von einem Internet-Terminal, über eine kontaktlose Schnittstelle in das Mobilgerät 1 übertragen. Die kontaktlose Schnittstelle umfasst beispielsweise einen Infrarot-Sende-Empfänger 13 am Gehäuse des Mobilgeräts, oder eine induktive Spule in diesem Gehäuse oder in der SIM-Karte 12. Dadurch kann der Kunde Auftragscodes aus einem externen Gerät über diese kontaktlose Schnittstelle direkt in seinem Mobilgerät übertragen. Als Variante können die Auftragscodes auch aus dem Telekommunikationsnetz 2 gewonnen werden. In Fall eines Internet-, Intranet- oder WAP-tauglichen-Gerätes 1 können zum Beispiel die Auftragscodes aus besuchten WEB-Seiten gewonnen werden. Listen von Auftragscodes können auch optional im Speicher des Mobilgeräts 1 oder des Identifizierungsmoduls 12 gespeichert und von einem geeigneten Programm verwaltet werden, genauso wie zum Beispiel Listen von Telefonnummern oder von URL-Adressen in bekannten Mobilfunktelefonen.

Beim Betätigen einer bestimmten Taste, beispielsweise der Taste #, wird der ausgewählte Auftragscode von einer geeigneten Software im Terminal 1, vorzugsweise in der SIM-Karte 12, in Kurzmeldungen verpackt, beispielsweise in SMS-Meldungen, in USSD-Daten, oder als e-mail und durch das Mobilfunknetz 2 an eine Kurzmeldungbetriebszentrale (SMSC) 3 des betreffenden Netzoperators übermittelt. Optional kann die Meldung zwischen dem Terminal 1 und der Zentrale 3, oder zwischen dem Terminal 1 und dem Lieferanten 9, teilweise oder vollständig verschlüsselt werden. Die Zentrale 3 ist vorzugsweise mit einem Billingserver 4 verbunden, so dass die Telekommunikationsgebühren für diese Meldung sowie vorzugsweise auch der zu bezahlende Betrag für die bestellten Produkte oder Dienstleistungen direkt dem Konto des Kunden beim Netzoperator belastet werden können. Das Kommunikationsprotokoll zwischen der Zentrale 3 und dem Billingserver 4 kann beispielsweise die Übertragung von CDR (Call Detail Records), wie in GSM-Systemen üblich, und/oder von anderen Meldungen, umfassen. In einer Variante wird die Transaktion vom Billingsserver 4 gemäss einer im Auftragscode angegebenen Zahlungsart (per Kreditkarte, gegen Rechnung, usw.), oder gemäss einem gespeicherten Kundenprofil, dem Kunden verrechnet.

Die Zentrale 3 wird ausserdem mit einer Teilnehmerdatenbank 5 verbunden, in welcher zusätzliche kundenspezifische Parameter gespeichert sind. Die Teilnehmerdatenbank entspricht beispielsweise der Abonnentendatenbank mit Angaben über alle Abonnenten beim Operator des Netzes 2. Der Kunde wird beispielsweise mit Hilfe der im Header der empfangenen Meldung angegebenen IMSI (International Mobile Subscriber Identity) in der Zentrale 3 identifiziert; diese Identifizierung wird dann als Eingabekriterium für die Teilnehmerdatenbank 5 benutzt, aus der damit zusätzliche kundenspezifische Parameter gewonnen werden. Diese zusätzlichen Identifizierungsparameter umfassen beispielsweise die vollständige Adresse des Kunden, seine Verrechnungsadresse, seine Zugriffsrechte, seine bevorzugte Sprache, usw. Diese zusätzlichen Informationen werden dann von der SMSC-Zentrale 3 mit dem Inhalt der empfangenen Auftragscodes verknüpft, damit der Lieferant alle benötigten Angaben über den Kunden empfängt.

Vorzugsweise enthält die Teilnehmerdatenbank 5 auch Angaben 50 über die Solvenz des Kunden. Falls es sich aus diesen Angaben herausstellt, dass der Kunde nicht solvent ist, oder dass seine Solvenz für die bestellten Produkte oder Dienstleistungen nicht ausreichend ist, wird die Transaktion abgebrochen und der Auftragscode nicht an den Lieferanten weitergeleitet. In einer Variante wird der Auftragscode in diesem Fall mit einem Vermerk betreffend die Solvenzlage an den Lieferanten weitergeleitet. Vorzugsweise sendet in diesem Fall die SMSC-Zentrale 3 eine Meldung mit Angaben über die Rückweisungsgründe an den Kunden 1. Die Solvenzprüfung kann auch einen Test einer Kunden-Schwarzliste umfassen.

Falls die Solvenz ausreicht, wird der Auftragscode 100, verknüpft mit den kundenspezifischen zusätzlichen Parametern, an den Clearingsserver 7 weitergeleitet. Diese Übermittlung erfolgt beispielsweise durch ein TCP/IP-Netz 6 und über eine Schnittstelle 70, oder über einen anderen geeigneten Kommunikationskanal. Der Clearingserver 7 ist mit einer Lieferantendatenbank 71 verbunden. Die Lieferantendatenbank 71 wird beim Empfang jedes Auftragscodes von der SMSC-Zentrale 3 mit der im Auftragscode angegebenen Lieferanteninformation adressiert, so dass zusätzliche Lieferanteninformationen, zum Beispiel die aktuelle, vollständige Lieferantenadresse, gewonnen werden.

Der Auftragscode wird dann über eine Schnittstelle 72 und ein Netz 8 an den angegebenen Lieferanten weitergeleitet. Dieser Auftragscode kann beispielsweise je nach Lieferantenauswahl als Fax durch ein öffentliches Fernsprechnetz (PSTN, Public Service Telecommunication Network) oder als e-mail über ein TCP/IP Netz, oder einer entsprechenden Weiterentwicklung davon an den Lieferanten übermittelt werden. Entsprechend umfasst die Schnittstelle 72 ein FAX-Modul 720, beziehungsweise ein e-mail-Modul 721, zum Aufbereiten von Faxen, beziehungsweise e-mails. Andere Übertragungskanäle für Aufträge, zum Beispiel auch die normale Briefpost, können auch angewendet werden. Ebenso können die Auftragscodes individuell oder im Batch-Modus, zum Beispiel jeden Tag, jede Woche oder nach einer vordefinierten Anzahl Aufträge, an den Lieferanten 9 weitergeleitet werden.

Der Lieferant 9, der einen Auftrag von einem Kunden erhält, kann das bestellte Produkt dem Kunden liefern oder die angeforderte Dienstleistung leisten. Der Lieferant kann optional eine Bestätigung als Kurzmeldung, zum Beispiel als e-mail oder als SMS-Kurzmeldung, an den Kunden schicken, sobald er den Auftrag angenommen hat.

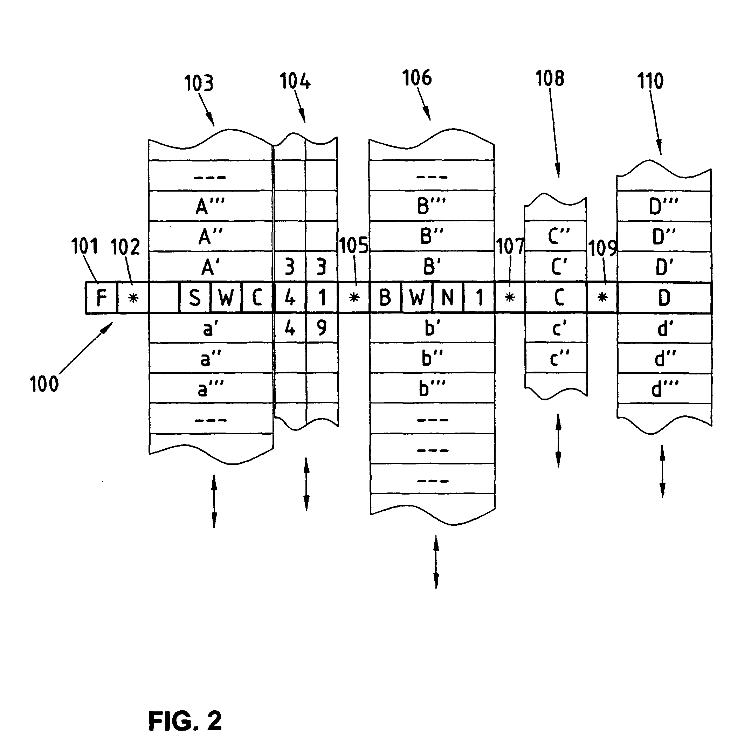

Wir werden jetzt mit Hilfe der Figur 2 beschreiben, wie neue Auftragscodes 100 editiert und eingegeben werden können. Auftragscodes beinhalten mehrere Felder, deren Format standardisiert ist, und die mit den Bezugszeichen 101 bis 110 bezeichnet sind. Das Feld 101 enthält einen Header und zeigt an, dass es sich hier tatsächlich um einen Auftragscode handelt. Im einfachsten Fall umfasst der Header nur ein einziges ASCII-Symbol, in diesem Beispiel den Buchstaben F. Das zweite Feld 102 ist ein vordefinierter Feldbegrenzer, hier ein Stern, um andere Felder zu trennen. Das nächste Feld 103 enthält eine Identifizierung des Lieferanten: z.B. eine Abkürzung, oder einen mnemotechnischen Code, der einen bestimmten Lieferanten eindeutig bezeichnet oder eine alphanumerische Bezeichnung, die dem Lieferanten durch eine Clearingstelle zugeteilt wird. In diesem Beispiel enthält das Feld 103 die Bezeichnung SWC, als mögliche abgekürzte Identifizierung für Swisscom. Das Feld 104 gehört zur Lieferanteninformation und bezeichnet das Land, in welchem dieser Lieferant vorwiegend aktiv ist. Die Landesbezeichnung 104 entspricht vorzugsweise der konventionellen Telefonlandeskennzahl; in diesem Beispiel entspricht die Bezeichnung 41 der Landeskennzahl für die Schweiz. Der Lieferant, in diesem Beispiel Swisscom, wird eindeutig mit der kompletten Lieferantenidentifizierung SWC41 identifiziert. Im Fall eines international aktiven Lieferanten kann die Landesbezeichnung 104 weggelassen werden, oder mit einer internationalen Abkürzung - zum Beispiel « com » - ersetzt werden.

Das Feld 105 enthält einen zweiten Feldbegrenzer, in diesem Beispiel wieder das Symbol *. Das nächste Feld 106 umfasst eine Produktidentifizierung, hier BWN1. Mit dieser vom Lieferanten ausgewählten Abkürzung oder Bezeichnung wird ein bestimmtes Produkt im Angebot dieses Lieferanten angegeben. Als Variante können Auftragscodes mehrere Felder für verschiedene Produktidentifizierungen umfassen, oder es können Produktidentifizierungen definiert werden, mit welchen mehrere Produkte oder Dienstleistungen angegeben werden. Dieses Feld ist mit einem dritten Feldbegrenzer 107 vom Feld 108 getrennt, das eine Checksumme enthält. Ein oder mehrere zusätzliche Felder 110, getrennt mit einem zusätzlichen Feldbegrenzer 109, können für zusätzliche Informationen definiert werden. Diese zusätzlichen Informationen können zum Beispiel die Transaktionsart angeben (zum Beispiel: « Ich will das Produkt bestellen » oder « Ich brauche nur Informationen über dieses Produkt »), die Zahlungsart (per Kreditkarte, mit Rechnung, direkte Belastung des Kontos beim Netzbetreiber usw.), und jede andere mögliche, standardisierte oder vom Lieferanten definierte Information, die benötigt wird. In einer Variante kann das Feld auch eine Lieferadresse umfassen, falls diese verschieden von der Klientenadresse ist. Programmteile, zum Beispiel Applets in der Java-Sprache, oder in einer anderen Objekt-orientierten Computersprache, können auch innerhalb des Felds 110 übertragen werden. Mit diesen Applets können zum Beispiel auch Menüs oder Listen für die Eingabe von zusätzlichen Parametern definiert werden.

Die Felder 101-110 können eine beliebige Kombination von alphanumerischen Symbolen enthalten. Jedes alphanumerische Symbol kann z. B. 46 verschiedene Werte annehmen z.B. 26 Buchstaben, 10 Zahlen und 10 weitere verfügbare Symbole auf der Tastatur eines Mobilfunktelefons. Weitere Auswahlen von berechtigten Symbolen können natürlich definiert werden, z.B. dadurch, dass zwischen Gross- und Kleinbuchstaben unterschieden wird. Die Felder 103, 104, 106, 108, 110 weisen eine variable Länge auf, die gesamte Länge des Auftragscodes kann jedoch z.B. auf 24 Zeichen beschränkt sein. Bei der einen Variante haben diese Felder eine vorbestimmte, fixe Länge: in diesem Fall sind die Feldbegrenzer nicht nötig und können weggelassen werden. Das Feld 110 kann als Variante auch binäre Daten enthalten, zum Beispiel Programmteile oder Objekte oder Verknüpfungen zu binären Daten.

Die Checksumme 108 ist durch irgendeinen bekannten Fehlerprüfungs- oder Fehlerkorrektur-Algorithmus aus den Feldern 103, 104, 106 und eventuell 110 festgelegt. Zum Festlegen des Wertes der Checksumme 108 kann z.B. ein Paritätskontrollalgorithmus verwendet werden. Die Anzahl der Zeichen der Checksumme hängt vom benützten Algorithmus und von der maximal akzeptierten Fehlerquote ab. Diese Checksumme wird vorzugsweise vom Betreiber der zentralen Produktelieferantendatenbank ermittelt und muss vom Klienten erfasst werden. Damit können Fehler bei der Eingabe oder bei der Übermittlung eines Auftragscodes festgestellt werden. Bei einer Variante eines interaktiven Systems, z.B. via USSD, kann diese Checksumme weggelassen werden. Dem Klienten wird stattdessen das bestellte Produkt als Quittung angezeigt.

Um einen Auftragscode 100 zu editieren, wählt beispielsweise der Kunde eine entsprechende Menüoption in einem geeigneten Programm, das vom Prozessor des Mobilgeräts 1 oder vorzugsweise des Identifizierungsmoduls 12 ausgeführt wird. Als Variante kann der Kunde beispielsweise auch eine entsprechende Internet-Seite konsultieren, oder eine geeignete Telefonnummer anwählen. In jedem Fall wird eine Eingabemaske auf dem Bildschirm 10 dargestellt, mit welchem er den gewünschten Auftragscode eingeben kann.

Die ihm präsentierte Eingabemaske 100 ist nicht völlig leer, sondern enthält vorzugsweise schon mindestens ein fest definiertes, nicht editierbares Feld. Vorzugsweise sind in der ursprünglichen Eingabemaske die Felder 101 und 102, deren Inhalt vordefiniert ist, schon angezeigt, sowie eventuell die Felder 105, 107 und 108, wenn die Länge der verschiedenen Felder fest definiert ist.

Die Felder 103, 104, 106, 108 und 110 können mit den Eingabemitteln 11 frei eingegeben werden. Als Variante können sie ausserdem aus einer im Terminal 1 gespeicherten Liste ausgewählt werden, wie schematisch dargestellt. Der Wert im Feld 103 kann beispielsweise unter den gelisteten Werten A"', A",...,a", a"' mit den Pfeiltasten 111, 112 ausgewählt werden. Ein geeignetes Listenverwaltungsprogramm kann vorgesehen werden, um neue Werte in einer Liste hinzufügen, beispielsweise um neue Lieferantenabkürzungen zu speichern, oder umgekehrt, um bestehende Abkürzungen zu löschen. Wenn der gewünschte Wert nicht in einer Liste gespeichert ist, beispielsweise wenn eine Lieferantenabkürzung zum ersten Mal benutzt wird, kann sie mit den Eingabemitteln eingegeben werden.

Gemäss der Erfindung enthält die Eingabemaske auch mindestens ein Feld, hier das Feld 104, das mit den Eingabemitteln des Mobilgeräts editierbar und überschreibbar ist, und dessen ursprünglicher Inhalt von einem gespeicherten Wert abhängig ist, der beim Einloggen des Mobilgeräts im Mobilfunknetz 2 ermittelt wird. In diesem bevorzugten Beispiel enthält das Feld einen Teil der Information, die zur eindeutigen Identifizierung des Lieferanten benötigt wird, und entspricht der Telefonlandeskennzahl des Landes, in welchem der Lieferant hauptsächlich aktiv ist. Die Eingabemaske, die dem Kunden präsentiert wird, enthält ursprünglich die Landeskennzahl des Landes, in welchem er sich beim Einloggen seines Mobilgeräts befindet. In Fall eines GSM-Mobilgeräts 1 wird standardmässig diese Information, die in diesem Kontext meistens MCC (Mobile Country Code) benannt wird, beim Einloggen aus der Netzinfrastruktur in die SIM-Karte 12 übertragen, und in einem Register EF_{LOCI} in dieser Karte gespeichert. Da viele Aufträge für einen Lieferanten desjenigen Landes, in welchem der Kunde sich momentan befindet, bestimmt sind, wird erfindungsgemäss diese Information als ursprünglicher Wert für das Feld 104 benutzt. Falls der Kunde dennoch eine andere Landeskennzahl benutzen möchte, weil er beispielsweise Produkte oder Informationen von einem ausländischen Lieferanten anfordern möchte, kann er dieses Feld einfach mit den Eingabemitteln 11 überschreiben, oder als Variante eine andere Kennzahl aus einer gespeicherten Liste mit den Pfeiltasten 111, 112 auswählen.

Der Fachmann wird verstehen, dass anstelle von Telefonlandeskennzahlen auch andere Länderabkürzungen benutzt werden können. Zum Beispiel können die im Internet-Bereich gewöhnlichen Zwei-Buchstaben-Abkürzungen, zum Beispiel .CH für die Schweiz oder .DE für Deutschland, auch angewendet werden. In diesem Fall wird möglicherweise eine Korrespondenztabelle im Terminal 1, 10 gespeichert, in welchem die MCC-Codes, die aus dem Netz 2 erhalten werden, mit entsprechenden Länderabkürzungen verknüpft werden.

Im Fall eines Mobilgeräts, das über eine kontaktlose Schnittstelle 13 verfügt, zum Beispiel über eine Infrarot- oder induktive Schnittstelle, kann, wie schon erwähnt, auch der Auftragscode direkt über diese Schnittstelle aus einem externen Gerät 14 übertragen werden. In diesem Fall kann er vorzugsweise auch mit einer Eingabemaske 100 editiert werden. In einer Variante können auch nur Teile von Auftragscodes aus einem externen Gerät 14 gewonnen werden. Beispielsweise können von einem externen Gerät eine Lieferantenabkürzung sowie eine Liste von verschiedenen Produktabkürzungen für die von diesem Lieferanten angebotenen Produkte B, B', B", usw. übertragen werden. Die Liste kann beispielsweise in einem Applet enthalten sein. Der Kunde kann dann mit der beschriebenen Eingabemaske ein bestimmtes Produkt aus dieser Liste auswählen, und optional die anderen Felder 108, 110 usw. editieren.

Im Fall eines Mobilgeräts 1, das Zugriff auf HTML-(Hypertext Markup Language) und/oder WML-(Wireless Markup Language) Seiten im Telekommunikationsnetz 2 hat, können natürlich Auftragscodes und entsprechende Editierungs-Applets aus diesen Seiten übertragen werden. In einer Variante können auch Auftragscodes mit speziellen Meldungen, beispielsweise mit SMS, USSD oder e-mail Meldungen, durch das Netz 2 übertragen und schliesslich mit der erfindungsgemässen Eingabemaske 100 editiert werden. Auch in diesem Fall erweist es sich als vorteilhaft, wenn die übertragenen Meldungen Applets enthalten, mit denen die Eingabe der Werte in den Feldern 103, 106 und 110 erleichtert wird.

Auftragscodes entsprechen meistens einem bestimmten Produkt eines bestimmten Lieferanten und können daher für dieses Produkt statisch definiert werden. Ein Lieferant kann beispielsweise einen bestimmten Auftragscode für ein angebotenes Produkt oder eine Dienstleistung definieren und diesen Auftragscode auf all seinen Werbungen und Katalogen angeben, damit potentielle Kunden dieses Produkt oder diese Dienstleistung bestellen können. Wie schon erwähnt, kann eine einzige Produktidentifizierung 106 auch einer Vielzahl von Produkten entsprechen. In diesem Fall können die Auftragscodes auch dynamisch definiert werden. Der Kunde stellt zum Beispiel mit einem geeigneten Programm einen Warenkorb aus mehreren Produkten oder Dienstleistungen zusammen, und bestätigt dann mit einem geeigneten Befehl, dass er zum Beispiel diesen Warenkorb bestellen möchte oder dass er Informationen darüber wünscht. Ein geeignetes Programm im Terminal 1, beispielsweise in der SIM-Karte 12, ermittelt dann automatisch mit einem vom Lieferanten 9 bekannten Algorithmus einen Auftragscode 100, der die Produkte im Warenkorb eindeutig identifiziert, und der vorzugsweise noch mit der Eingabemaske editiert werden kann, um beispielsweise noch die Zahlungsart oder die Lieferadresse anzugeben. Der Prüfcode 108 wird ebenfalls automatisch von diesem Programm ermittelt. In einer bevorzugten Variante werden die Produktidentifizierung 106 und der entsprechende Prüfcode 108 dynamisch von einem Server im Telekommunikationsnetz 2 ermittelt und an das Terminal 1 übermittelt.

## Patentansprüche

1. Verfahren, um Auftragscodes (100) mit einem Terminal (1, 10) in einem Telekommunikationsnetz (2) einzugeben, wobei eine Eingabemaske für die Eingabe des Auftragscodes am Bildschirm (10) des Terminals (1) angezeigt wird, wobei die Auftragscodes mindestens eine Lieferantenidentifizierung (103) enthalten, mit der jeder Auftragscode automatisch an den angegebenen Lieferanten (9) durch das benannte Telekommunikationsnetz geleitet wird, sowie mindestens eine Produkt- und/oder Dienstleistungs-Identifizierung (106),
wobei die Eingabemaske mindestens ein mit den Eingabemitteln (11) des Terminals (1) editierbares Feld (10, 106, 108, 110) sowie mindestens ein überschreibbares Feld (104), dessen ursprünglicher Inhalt (41) von einem im Terminal (1, 10) gespeicherten Wert (MCC) abhängig ist, enthält, wobei der benannte gespeicherte Wert beim Einloggen des Terminals im benannten Telekommunikationsnetz (2) aktualisiert wird und mit den benannten Eingabemitteln (11) überschrieben werden kann.

2. Verfahren gemäss dem vorhergehenden Anspruch, **dadurch gekennzeichnet, dass** die Eingabemaske ausserdem mindestens ein fest definiertes, nicht editierbares Feld (101, 102) enthält.

3. Verfahren gemäss einem der vorhergehenden Ansprüche, **dadurch gekennzeichnet, dass** der benannte gespeicherte Wert (104) mit den benannten Eingabemitteln (11) in einer Liste ausgewählt werden kann.

4. Verfahren gemäss einem der vorhergehenden Ansprüche, **dadurch gekennzeichnet, dass** der benannte gespeicherte Wert (104) beim Einloggen aus der Infrastruktur des Telekommunikationsnetzes (2) übertragen wird.

5. Verfahren gemäss dem vorhergehenden Anspruch, **dadurch gekennzeichnet, dass** das Terminal ein Mobilgerät (1, 10) ist, dass das benannte Telekommunikationsnetz ein Mobilfunknetz ist, und dass der benannte gespeicherte Wert (104) den Standort (MCC) dieses Mobilgeräts (1) angibt.

6. Verfahren gemäss dem vorhergehenden Anspruch, **dadurch gekennzeichnet, dass** der benannte gespeicherte Wert (104) der Telefonlandeskennzahl (MCC) des besuchten Mobilfunknetzes (2) entspricht.

7. Verfahren gemäss einem der vorhergehenden Ansprüche, **dadurch gekennzeichnet, dass** der benannte gespeicherte Wert (104) mindestens einem Teil der Lieferantenidentifizierung entspricht.

8. Verfahren gemäss einem der vorhergehenden Ansprüche, **dadurch gekennzeichnet, dass** mindestens ein Teil des Feldes (106), das die Produkt- oder Dienstleistungsidentifizierung enthält, mit den benannten Eingabemitteln (11, 111, 112) eingegeben werden kann.

9. Verfahren gemäss einem der vorhergehenden Ansprüche, **dadurch gekennzeichnet, dass** der Wert im benannten Feld (106), das die Produkt- oder Dienstleistungsidentifizierung enthält, aus einer Liste mit den benannten Eingabemitteln (11, 111, 112) ausgewählt werden kann.

10. Verfahren gemäss einem der Ansprüche 8 oder 9, **dadurch gekennzeichnet, dass** die benannte Produkt- und/oder Dienstleistungs-Identifizierung (106) eine Vielzahl von ausgewählten Produkten und/oder Dienstleistungen entsprechen kann und in Abhängigkeit von ausgewählten Produkten und/oder Dienstleistungen dynamisch erzeugt wird.

11. Verfahren gemäss dem vorhergehenden Anspruch, **dadurch gekennzeichnet, dass** die benannte Produkt- und/oder Dienstleistungs-Identifizierung (106) von einem Server im benannten Telekommunikationsnetz (2) dynamisch erzeugt wird.

12. Verfahren gemäss Anspruch 10, **dadurch gekennzeichnet, dass** die benannte Produkt- und/oder Dienstleistungs-Identifizierung (106) mit einem geeigneten Programm im benannten Terminal (2) dynamisch erzeugt wird.

13. Verfahren gemäss einem der vorhergehenden Ansprüche, **dadurch gekennzeichnet, dass** die Auftragscodes (100) ausserdem mindestens eine Zahlungsartinformation (110) enthalten.

14. Verfahren gemäss einem der vorhergehenden Ansprüche, **dadurch gekennzeichnet, dass** die Auftragscodes (100) ausserdem mindestens einen Prüfcode enthalten.

15. Verfahren gemäss einem der vorhergehenden Ansprüche, **dadurch gekennzeichnet, dass** die Auftragscodes (100) ausserdem mindestens eine Kundenlieferadresse enthalten.

16. Verfahren gemäss einem der vorhergehenden Ansprüche, **dadurch gekennzeichnet, dass** die Auftragscodes (100) mindestens ein Feld enthalten, dessen Inhalt von kontaktlos aus einem externen Gerät (14) übermittelten Informationen abhängig ist.

17. Verfahren gemäss einem der vorhergehenden Ansprüche, **dadurch gekennzeichnet, dass** die erfassten Auftragscodes (100) in einer Meldung verpackt werden und durch das benannte Telekommunikationsnetz (2) an eine Zentrale (7) übermittelt werden, die diese Auftragscodes an den mit der benannten Lieferantenidentifizierung (103, 104) angegebenen Lieferanten (9) weiterleitet.

18. Verfahren gemäss dem vorhergehenden Anspruch, **dadurch gekennzeichnet, dass** die benannten Auftragscodes (100) im benannten Telekommunikationsnetz mit in einer Kundendatenbank (5) abgelegten kundenspezifischen Informationen (50) verknüpft werden.

19. Verfahren gemäss einem der Ansprüche 17 oder 18, **dadurch gekennzeichnet, dass** eine Solvenzprüfung betreffend die benannten Auftragscodes (100) erfolgt, und dass die Auftragscodes (100) nicht an den angegebenen Lieferanten (9) weitergeleitet werden, wenn diese Solvenzprüfung nicht positiv verlaufen ist.

20. Verfahren gemäss einem der Ansprüche 17 oder 18, **dadurch gekennzeichnet, dass** eine Solvenzprüfung betreffend die benannten Auftragscodes (100) erfolgt, und dass die Auftragscodes mit einem Vermerk betreffend die Solvenzlage weitergeleitet werden, wenn diese Solvenzprüfung nicht positiv verlaufen ist.

21. Verfahren gemäss einem der vorhergehenden Ansprüche, **dadurch gekennzeichnet, dass** mindestens gewisse bereits eingegebene Auftragscodes in einem geeigneten Speicherbereich des Terminals (1, 10) gespeichert und aus diesem Speicherbereich vom Kunden abgeholt werden können.

22. Identifizierungskarte (10), die zur Teilnehmeridentifizierung mit einem Mobilgerät (1) verbunden werden kann, **dadurch gekennzeichnet, dass** sie ein gespeichertes Programm sowie Datenverarbeitungsmittel enthält, mit welchen das Verfahren eines der vorhergehenden Ansprüche ausgeführt werden kann, wenn die Identifizierungskarte (10) in einem Mobilgerät (1) eingesteckt ist.

## Claims

1. Method for entering order codes (100) with a terminal (1, 10) in a telecommunications network (2), an input mask for the input of the order code being displayed on the screen (10) of the terminal (1 ), the order code containing at least one supplier identification (103), with which each order code is automatically passed on to the indicated supplier (9) through said telecommunications network, as well as at least one product and/or service identification (106),
the input mask containing at least one field (10, 106, 108, 110) able to be edited with the input means (11) of the terminal (1) as well as at least one field (104) which can be written over, the original content (41) of which depends on a value (MCC) stored in the terminal (1, 10), the said stored value being updated during logging of the terminal into said telecommunications network (2), and which value can be written over with the said input means (11).

2. Method according to the preceding claim, **characterised in that** the input mask further contains at least one field (101, 102) of fixed definition which cannot be edited.

3. Method according to one of the preceding claims, **characterised in that** the said stored value (104) can be selected from a list using the said input means (11).

4. Method according to one of the preceding claims, **characterised in that** the said stored value (104) is transmitted from the infrastructure of the telecommunications network (2) during logging in.

5. Method according to the preceding claim, **characterised in that** the terminal is a mobile device (1, 10), **in that** the said telecommunications network is a mobile radio network, and **in that** the said stored value (104) indicates the position (MCC) of this mobile device (1).

6. Method according to the preceding claim, **characterised in that** the said stored value (104) corresponds to the telephone country code (MCC) of the visited mobile radio network (2).

7. Method according to one of the preceding claims, **characterised in that** the said stored value (104) corresponds to at least a part of the supplier identification.

8. Method according to one of the preceding claims, **characterised in that** at least a part of the field (106) which contains the product or service identification can be input with the said input means (11, 111, 112).

9. Method according to one of the preceding claims, **characterised in that** the value in the said field (106) which contains the product or service identification can be selected from a list using the said input means (11, 111, 112).

10. Method according to one of the claims 8 or 9, **characterised in that** the said product and/or service identification (106) can correspond to a multiplicity of selected products and/or services, and is generated dynamically on the basis of selected products and/or services.

11. Method according to the preceding claim, **characterised in that** the said product and/or service identification (106) is generated dynamically by a server in said telecommunications network (2).

12. Method according to claim 10, **characterised in that** the said product and/or service identification (106) is generated dynamically with a suitable program in said terminal.

13. Method according to one of the preceding claims, **characterised in that** the order codes (100) further contain at least one piece of information (110) on payment mode.

14. Method according to one of the preceding claims, **characterised in that** the order codes (100) further contain at least one check code.

15. Method according to one of the preceding claims, **characterised in that** the order codes (100) further contain at least a customer delivery address.

16. Method according to one of the preceding claims, **characterised in that** the order codes (100) contain at least one field the content of which depends upon information transmitted in a contactless way from an external device (14).

17. Method according to one of the preceding claims, **characterised in that** the captured order codes (100) are packed into a message and are transmitted through the said telecommunications network (2) to a centre (7) which passes these order codes on to the supplier (9) indicated by the said supplier identification (103, 104).

18. Method according to the preceding claim, **characterised in that** the said order codes (100) are linked in the said telecommunications network with customer-specific information (50) filed in a customer data base (5).

19. Method according to one of the claims 17 or 18, **characterised in that** a solvency check takes place in connection with the said order codes, and **in that** the order codes (100) are not passed on to the indicated supplier (9) if the result of this solvency check is not positive.

20. Method according to one of the claims 17 or 18, **characterised in that** a solvency check takes place in connection with the said order codes (100), and **in that** the order codes are passed on with a note concerning the solvency situation if this solvency check does not have a positive result.

21. Method according to one of the preceding claims, **characterised in that** at least certain already input order codes are stored in a suitable memory area of the terminal (1, 10), and can be called up from this memory area by the customer.

22. Identification card (10) which can be connected with a mobile device (1) for subscriber identification, **characterised in that** it contains a stored program as well as data processing means with which the method of one of the preceding claims can be carried out if the identification card (10) is inserted into a mobile device (1).

## Revendications

1. Procédé pour saisir des codes de commande (100) par un terminal (1, 10) dans un réseau de télécommunication (2), un masque de saisie étant affiché sur l'écran (10) du terminal (1) pour la saisie du code de commande, les codes de commandes contenant au moins une identification de fournisseur (103), avec laquelle chaque code de commande est acheminé directement au fournisseur indiqué (9) par ledit réseau de télécommunication, ainsi qu'au moins une identification de produit et/ou service (106),
le masque de saisie comprenant au moins un champ éditable (10, 106, 108, 110) éditable avec les moyens de saisie (11) du terminal (1) ainsi qu'un champ écrasable (104) dont le contenu d'origine (41) dépend d'une valeur (MCC) stockée dans le terminal (1, 10), ladite donnée mémorisée étant actualisée lors de l'ouverture de session du terminal dans le réseau de télécommunication (2) et pouvant être écrasée par lesdits moyens de saisie (11 ).

2. Procédé selon la revendication précédente, **caractérisé en ce que** le masque de saisie comprend en outre au moins un champ défini non éditable (101,102).

3. Procédé selon l'une des revendications précédentes, **caractérisé en ce que** ladite valeur stockée (104) peut être sélectionnée dans une liste à l'aide desdits moyens de saisie (11).

4. Procédé selon l'une des revendications précédentes, **caractérisé en ce que** ladite valeur stockée (104) est transmise lors de l'ouverture de session depuis l'infrastructure du réseau de télécommunication (2).

5. Procédé selon l'une des revendications précédentes, **caractérisé en ce que** le terminal est un appareil mobile (1, 10), **en ce que** le réseau de télécommunication est un réseau mobile et **en ce que** ladite valeur mémorisée (104) indique le lieu (MCC) de cet appareil mobile (1).

6. Procédé selon l'une des revendications précédentes, **caractérisé en ce que** ladite valeur mémorisée (104) correspond au préfixe téléphonique (MMC) du réseau mobile fréquenté (2):

7. Procédé selon l'une des revendications précédentes, **caractérisé en ce que** ladite valeur mémorisée (104) correspond au moins à une partie de l'identification de fournisseur.

8. Procédé selon l'une des revendications précédentes, **caractérisé en ce qu'**au moins une partie du champ (106) qui comprend l'identification de produit ou service peut être saisie avec lesdits moyens de saisie (11, 111, 112).

9. Procédé selon l'une des revendications précédentes, **caractérisé en ce que** la valeur dans le champ (106) qui comprend l'identification de produit ou service peut être saisie avec lesdits moyens de saisie (11, 111, 112).

10. Procédé selon l'une des revendications 8 ou 9, **caractérisé en ce que** ladite identification de produit ou service (106) peut correspondre à un grand nombre de produits et/ou services sélectionnés et peut être générée de manière dynamique en fonction des produits et/ou services sélectionnés.

11. Procédé selon la revendication précédente, **caractérisé en ce que** ladite identification de produit ou service (106) est générée de manière dynamique par un serveur dans ledit réseau de télécommunication (2).

12. Procédé selon la revendication 10, **caractérisé en ce que** ladite identification de produit ou service (106) est générée de manière dynamique par un programme approprié dans ledit terminal (2).

13. Procédé selon l'une des revendications précédentes, **caractérisé en ce que** les codes de commande (100) contiennent en outre au moins une information de paiement (110).

14. Procédé selon l'une des revendications précédentes, **caractérisé en ce que** les codes de commande (100) contiennent en outre au moins un code de contrôle.

15. Procédé selon l'une des revendications précédentes, **caractérisé en ce que** les codes de commande (100) contiennent en outre au moins une adresse de livraison de client.

16. Procédé selon l'une des revendications précédentes, **caractérisé en ce que** les codes de commande (100) contiennent en outre au moins un champ dont le contenu dépend d'informations transmises sans contact depuis un appareil externe (14).

17. Procédé selon l'une des revendications précédentes, **caractérisé en ce que** les codes de commande saisis (100) sont intégrés dams un message et sont transmis par ledit réseau de télécommunication (2) à une centrale (7) qui transmet ces codes de commande aux fournisseurs (9) indiqués avec ladite identification de fournisseur (103, 104).

18. Procédé selon l'une des revendications précédentes, **caractérisé en ce que** lesdits codes de commande (100) sont reliés dans ledit réseau de télécommunication avec des informations (50) spécifiques au client déposées dans une banque de données de client (5).

19. Procédé selon l'une des revendications 17 ou 18, **caractérisé en ce qu'**un contrôle de solvabilité concernant lesdits codes de commande (100) est effectué et **en ce que** les codes de commande ne sont pas transmis au fournisseur indiqué (9) si le test de solvabilité n'est pas positif.

20. Procédé selon l'une des revendications 17 ou 18, **caractérisé en ce qu'**un contrôle de solvabilité concernant lesdits codes de commande (100) est effectué et **en ce que** les codes de commande sont transmis avec une remarque concernant la solvabilité si ce test de solvabilité n'est pas positif.

21. Procédé selon l'une des revendications précédentes, **caractérisé en ce qu'**au moins certains codes de commande déjà saisis sont stockés dans une zone de mémoire appropriée du terminal (1, 10) et peuvent être prélevés par le client depuis la zone de mémoire.

22. Carte d'indentification (10) qui peut être reliée à un appareil mobile (1) pour l'identification d'abonnés, **caractérisé en ce qu'**elle contient un programme mémorisé ainsi que des moyens de traitement de données avec lesquels le procédé de l'une des revendications précédentes peut être mis en oeuvre quand la carte d'identification (10) peut être insérée dans un appareil mobile (1).
